Europäisches Patentamt

European Patent Office

Office européen des brevets

(19)

(11) Veröffentlichungsnummer : **0 388 663 B1**

## (12) EUROPÄISCHE PATENTSCHRIFT

(45) Veröffentlichungstag der Patentschrift :
29.01.92 Patentblatt 92/05

(21) Anmeldenummer : **90103627.7**

(22) Anmeldetag : **24.02.90**

(51) Int. Cl.⁵ : **F16L 3/12**, F16L 33/04

(30) Priorität : **22.03.89 DE 3909367**

(43) Veröffentlichungstag der Anmeldung :
**26.09.90 Patentblatt 90/39**

(45) Bekanntmachung des Hinweises auf die
Patenterteilung :
**29.01.92 Patentblatt 92/05**

(84) Benannte Vertragsstaaten :
**AT CH DE ES FR GB LI**

(56) Entgegenhaltungen :
**AT-B- 387 834**
**DE-A- 2 911 897**
**DE-U- 1 945 024**

(73) Patentinhaber : "**TOGE-DÜBEL**" **A. Gerhard GmbH**
**Illesheimer Strasse 10**
**W-8500 Nürnberg 80 (DE)**

(72) Erfinder : **Gerhard, Anton**
**Illesheimer Strasse 10**
**W-8500 Nürnberg 80 (DE)**

(74) Vertreter : **Rau, Manfred, Dr. Dipl.-Ing. et al**
**Rau & Schneck, Patentanwälte Königstrasse 2**
**W-8500 Nürnberg 1 (DE)**

(54) Rohrschelle.

EP 0 388 663 B1

## Beschreibung

Die Erfindung betrifft eine Rohrschelle nach dem Oberbegriff des Anspruches 1.

Eine derartige aus dem DE-U-1945024 bekannte Rohrschelle besteht aus einem einstückigen Schellenring, an dessen einander zugewandten Enden Flansche nach außen abgebogen sind. In einem der Flansche ist eine Bohrung ausgebildet, durch die eine Schließ-Schraube hindurchgeführt ist, deren Kopf auf der Außenseite des Flansches anliegt. Im gegenüberliegenden Flansch ist ein Aufnahmeloch mit einem Gewinde für die Schließ-Schraube ausgebildet. Auf der dem Aufnahmeloch benachbarten Seite des Schellenrings ist eine Befestigungseinrichtung vorgesehen, mittels derer die Rohrschelle an einer Decke, Wand oder sonstigen Tragkonstruktion befestigt werden kann. Der Schellenring kann mit einer Innenmanschette aus Gummi oder dergleichen versehen sein. Zum Einlegen eines Rohres oder dergleichen, das mittels der Rohrschelle an einer Decke, Wand oder sonstigen Tragkonstruktion befestigt werden soll, wird der Schellenring aufgebogen und nach dem Einlegen des Rohres wieder zusammengebogen. Anschließend muß die Schließ-Schraube in das Aufnahmeloch des gegenüberliegenden Flansches bzw. Steges eingeschraubt werden. Das Ausrichten von Rohren bei noch nicht oder bereits teilweise geschlossener Rohrschelle ist mühsam.

Aus der DE-A-2911897 ist eine Rohrschelle bekannt, die ebenfalls einen einstückigen Schellenring aufweist. An den einander zugewandten Enden des Schellenrings ist ein Rastverschluß ausgebildet. Dieser besteht aus einer an einem Ende des Schellenrings ausgebildeten Rastnase und einer im Bereich des anderen Endes des Schellenrings ausgebildeten Rastnasenaufnahme. Auch hierbei ist das Ausrichten eines im Schellenrings aufgenommenen Rohres sehr mühsam, wenn der Schellenring bereits geschlossen ist. Bei offenem Schellenring ist ein Ausrichten nicht möglich.

Aus dem DE-U-7714454 ist eine Rohrschelle bekannt, die insoweit der nach der DE-A-2911897 entspricht.

Der Erfindung liegt die Aufgabe zugrunde, eine Rohrschelle der gattungsgemäßen Art so auszugestalten, daß ein einfaches Ausrichten von in die Rohrschelle eingelegten Rohren bei noch nicht verspanntem Schellenring möglich ist.

Diese Aufgabe wird erfindungsgemäß durch die Merkmale des Anspruches 1 gelöst. Kern der Erfindung ist, daß an einem Ende des Schellenrings ein Schließbügel angebracht ist, der zum provisorischen Schließen der Schelle über einen am anderen Ende des Schellenrings ausgebildeten Steg geschwenkt wird. Dieser Schließbügel bildet also eine Montagehilfe. Nach dem Einschieben eines Rohres in eine in der Regel an einer Decke, Wand oder sonstigen Tragkonstruktion bereits befestigte Rohrschelle kann dieser Schließbügel mit nur einer Hand geschlossen werden, so daß das Rohr erst einmal provisorisch im Schellenring gehalten wird. Hierbei wird durch die Maßnahmen nach Anspruch 2 sichergestellt, daß das im Schellenring aufgenommene Rohr noch ausreichend Luft hat, so daß es ausgerichtet werden kann.

Als Steg wird nach Anspruch 3 ein Flansch verwendet, der ohnehin das Aufnahmeloch trägt. Auf dieser Seite ist also ohnehin keinerlei zusätzliche Ausgestaltung der Rohrschelle notwendig. Auch die weitere Ausgestaltung nach Anspruch 4 stellt sicher, daß für die Befestigung des Schließbügels am Schellenring keinerlei zusätzliche Maßnahmen erforderlich sind. Hierbei wird durch die Weiterbildung nach den Ansprüchen 5 und 6 ohne zusätzliche Maßnahmen am Schellenring sichergestellt, daß der Schließbügel verliersicher in einer definierten Position schwenkbar am Flansch angebracht ist und somit auch beim Schließen mit nur einer Hand über den Steg gedrückt werden kann.

Die Weiterbildung nach Anspruch 7 ermöglicht es, den Schließbügel aus einem Draht zu biegen, wodurch gleichzeitig sichergestellt ist, daß der Schließbügel in einfacher Weise von der Rohrschelle entfernt werden kann, wenn er dort nach dem endgültigen Schließen der Rohrschelle nicht mehr erwünscht sein sollte. Durch die Weiterbildung nach Anspruch 8 ist hierbei sichergestellt, daß die Teilung des Quersteges nicht dazu führt, daß sich der Schließbügel aufziehen kann.

Der erfindungsgemäße Schließbügel ist ganz bevorzugt bei Rohrschellen mit einer Innen-Manschette aus elastischem Material anwendbar, da diese ein Rohr bereits relativ festhalten, auch wenn sie noch nicht endgültig zusammengespannt sind.

Die Weiterbildung nach Anspruch 10 führt dazu, daß die Ein-Hand-Bedienung verbessert wird, da der Flansch, an dem sich die Schwenkachse des Schließbügels befindet, in Richtung auf die Befestigungseinrichtung gedrückt wird.

Der erfindungsgemäße Schließbügel ist grundsätzlich bei einteiligen oder zweiteiligen Schellenringen anwendbar, bevorzugt ist er aber bei einteiligen Schellenringen einsetzbar.

Durch die Weiterbildung nach Anspruch 11 wird eine Art Rastverbindung zwischen dem Schließbügel und dem Steg hergestellt, da bei provisorisch geschlossenem Schellenring der Schließbügel unter Zugbelastung steht und mit seinem Quersteg unter den Vorsprung gelegt und dort gehalten wird.

Durch die Weiterbildung nach Anspruch 12 wird erreicht, daß bei geschlossenem Schließbügel die Schließ-Schraube mit ihrer Spitze am Aufnahmeloch angesetzt werden kann, ohne daß Flansch und Steg zuvor von Hand aufeinander zugedrückt werden müssen. Die Schließ-Schraube kann also bei geschlossenem Schließbügel bereits in das Aufnahmeloch eingreifen.

Durch die Weiterbildung nach Anspruch 13 wird schließlich erreicht, daß beim Schließen der Rohrschelle durch Einschrauben der Schließ-Schraube in das Aufnahmeloch des Steges der Schließbügel sich über dem Steg aufspreizt, so daß er ohne zusätzliches Werkzeug von der geschlossenen Rohrschelle abgenommen werden kann.

Weitere Vorteile, Merkmale und Einzelheiten der Erfindung ergeben sich aus der nachfolgenden Beschreibung eines Ausführungsbeispieles anhand der Zeichnung. Es zeigt

Fig. 1       eine Rohrschelle nach der Erfindung in Seitenansicht und

Fig. 2       eine Rohrschelle nach der Erfindung in einer Draufsicht gemäß dem Sichtpfeil II in Fig. 1.

Die in der Zeichnung dargestellte Rohrschelle weist einen einstückigen Schellenring 1 auf, der aus einem Blechstreifen gebogen ist. Er ist im wesentlichen über seinen Umfang mit nach außen herausgedrückten Versteifungsrippen 2 versehen. An seinem einen Ende ist ein als Steg 3 dienender Flansch etwa radial nach außen abgebogen. In seinem anderen Ende ist ein in der Außenkontur etwa dem Steg 3 gleicher Flansch 4 ebenfalls etwa radial nach außen abgebogen. In der Längsmitte des Schellenrings 1, also etwa gegenüberliegend zum Steg 3 und Flansch 4 ist eine nur angedeutete Ausnehmung in Form eines Loches 5 zwischen den beiden Versteifungsrippen 2 ausgebildet, wodurch eine Soll-Biegestelle 6 geschaffen wird, der bei einem zweiteiligen Schellenring 1 ein hier anzuordnendes Gelenk entsprechen würde. Beim Aufbiegen bzw. Zusammenbiegen des Schellenrings 1 tritt dessen Verformung im wesentlichen im Bereich dieser Biegestelle 6 auf.

Zwischen der Biegestelle 6 und dem Steg 3 ist auf der Außenseite des Schellenrings 1 eine Befestigungseinrichtung 7 in Form einer Mutter durch Schweißen befestigt. Hiermit kann die Rohrschelle an einem entsprechenden Gewindebolzen an einer Decke, oder Wand oder einem sonstigen Traggerüst befestigt werden. Dieser Teil des Schellenrings 1 wird damit bei einer derartigen Befestigung ortsfest festgelegt.

Die Innenseite des Schellenrings 1 ist mit einer Innen-Manschette 8 aus Gummi oder dgl. ausgekleidet, die die beiden Seitenränder des Schellenrings 1 mit Befestigungsflanschen 9 umgreift. Diese Innen-Manschette 8 kleidet den Schellenring 1 über seinen vollen Umfang aus ; aus Gründen zeichnerischer Übersichtlichkeit ist nur ein kurzer Abschnitt dargestellt.

Im Flansch 4 ist eine Bohrung 10 ausgebildet, durch die eine als Blechschraube mit selbstschneidendem Gewinde ausgebildete Schließschraube 11 hindurchgeführt ist, die durch eine elastische Sicherungsscheibe 12 so gegen Verlieren im Flansch 4 gehalten wird, daß ihr außen gegen den Flansch 4 anliegender Schraubenkopf 13 sich immer zumindest nahe am Flansch 4 befindet und zwar auch, wenn der Schellenring 1 noch offen ist.

Der Bohrung 10 und der Schließ-Schraube 11 zugeordnet ist ein Aufnahmeloch 14 im Steg 4, in das die Schließ-Schraube 11 unter Schneiden eines Gewindes einschraubbar ist. Wie der Zeichnung entnehmbar ist, ist das Aufnahmeloch 14 nach außen hin, also vom Flansch 4 weg, sich trichterförmig verjüngend ausgebildet, wodurch der Steg 3 im Randbereiches des Aufnahmeloches 14 vom Flansch 4 weg nach außen zu einem Vorsprung 15 verformt ist.

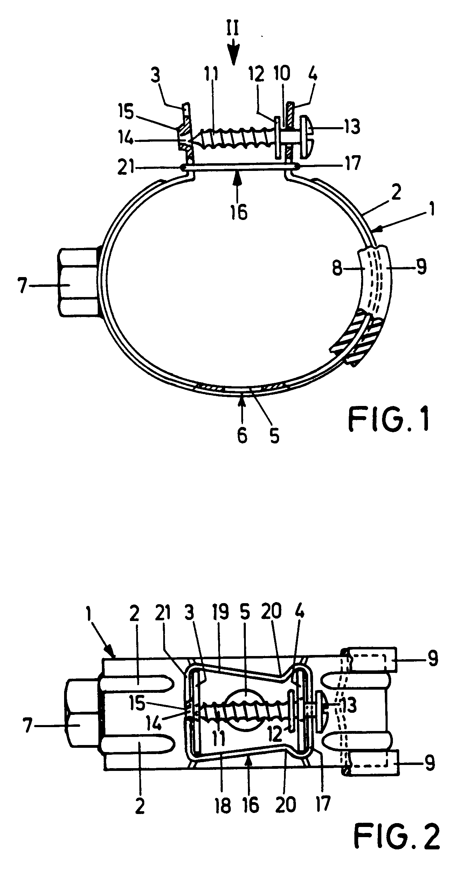

Am Flansch 4 ist ein Schließbügel 16 angelenkt, der in grober Näherung — wie aus Fig. 2 hervorgeht — etwa rechteckig ausgebildet ist. Er besteht aus einem ausreichend steifen Draht. Ein Quersteg 17 des Schließbügels 16 ist zwischen dem Schraubenkopf 13 und dem Schellenring 1 im Eckbereich zwischen dem Schellenring 1 und dem Flansch 4 angeordnet und bildet die Schwenkachse des Schließbügels 16. Die beiden etwa rechtwinklig zum Quersteg 17 verlaufenden Schenkel 18, 19 des Schließbügels sind unmittelbar hinter der dem Steg 3 zugewandten Seite des Flansches 4 mit einer einen Vorsprung bildenden Einbuchtung 20 versehen, deren lichter Abstand voneinander kleiner ist als die Breite des Flansches 4. Damit ist der Schließbügel nicht nur in der Ebene des Flansches 4, sondern auch senkrecht hierzu verliersicher am Flansch 4 angebracht, wobei das Spiel der Einbuchtungen 20 gegenüber dem Flansch 4 so groß ist, daß die Schwenkbewegung des Schließbügels 16 um den Quersteg 17 nicht behindert werden. Der dem Quersteg 17 gegenüberliegende Quersteg 21 wird durch die nach innen gebogenen Enden des Drahtes gebildet. Dieser Quersteg 21 ist also geteilt. Er verläuft parallel zum Quersteg 17.

Wie aus der Zeichnung hervorgeht, ist der Schließbügel 16 etwas kürzer als die Schließschraube 11, d.h. bei über den Steg 3 geschobenem Schließbügel 16 ragt deren Spitze in das Aufnahmeloch 14. Die Spitze der Schließ-Schraube 11 setzt an dem Aufnahmeloch 14 an. Der Schraubenkopf 13 hebt hierbei vom Flansch 4 ab, was die Sicherungsscheibe 12 ohne weiteres zuläßt. Der Quersteg 21 liegt bei provisorisch geschlossenem Schellenring 1 zwischen dem Vorsprung 15 und dem Schellenring 1 am Steg 3 an. Er ist auch insoweit gegen unabsichtliches Lösen der durch den Schließbügel 16 hergestellten Verbindung zwischen Flansch 4 und Steg 3 geschützt. Der Quersteg 21 bildet mit dem Vorsprung 15 eine Art Rastverbindung.

Wie Fig. 2 entnehmbar ist, sind der Steg 3 und der Flansch 4 etwas schmaler als der Schellenring 1 ausgebildet, so daß der Schließbügel 16 seitlich nicht über den Schellenring 1 vorsteht.

Zum provisorischen Schließen des Schellenrings 1 nach Einlegen eines Rohres wird der Teil des Schellenrings 1, an dem sich der Flansch 4 befindet, in Richtung auf den Teil des Schellenringes 1, an dem sich die Befestigungseinrichtung 7, gedrückt und hierbei mit der selben Hand der Schließbügel 16 soweit hochgeschwenkt, daß der Quersteg 21 über den äußeren Rand des Steges 3 bewegt werden kann. Anschließend wird der Schließbügel 16 zum Schellenring 1 hin verschwenkt, wodurch der Quersteg 21 in die bereits erwähnte Position am Steg 3 gelangt. Der Schellenring 1 ist hierbei noch relativ weit geöffnet, so daß ein in ihm aufgenommenes Rohr noch frei ausgerichtet werden kann. Die Vorteil dieser Montagehilfe kommen insbesondere bei schweren Rohren und entsprechend großen bzw. schweren Rohrschellen zum Tragen.

Wenn nach dem Ausrichten eines Schellenringes 1 zum endgültigen Verspannen des Schellenringes 1 die Schließ-Schraube 11 in Richtung auf den Steg 3 hingedrückt und in das Aufnahmeloch 14 eingeschraubt wird, dann werden Flansch 4 und Steg 3 aufeinander zubewegt, wodurch der Schellenring 1 geschlossen wird. Hierbei kommt der Quersteg 21 des Schließbügels 16 wieder vom Steg 3 frei und verliert seine Funktion. Hierbei gleiten die aufgrund der Einbuchtungen 20 schräg verlaufenden Schenkel 18, 19 über die Seitenkanten des Steges 3 und werden somit aufgespreizt. Nach dem vollständigen Schließen der Schelle ist der Schließbügel 16 also so weit aufgespreizt, daß er ohne zusätzliches Werkzeug von dem Steg 3 und dem Flansch 4 abgenommen werden kann.

**Patentansprüche**

1. Rohrschelle mit einem Schellenring (1) der zwei einander zugewandte Enden aufweist, wobei an einem Ende eine Schließ-Schraube (11) und am anderen Ende ein Aufnahmeloch (14) für die Schließ-Schraube (11) ausgebildet sind, dadurch gekennzeichnet, daß an einem Ende ein schwenkbarer Schließbügel (16) angeordnet ist und daß am anderen Ende ein vom Schellenring (1) etwa radial nach außen vorspringender vom Schließbügel (16) umgreifbarer Steg (3) ausgebildet ist.

2. Rohrschelle nach Anspruch 1, dadurch gekennzeichnet, daß bei den Steg (3) umgreifendem Schließbügel (16) der Umfang von Schellenring (1) und Schließbügel (16) größer ist, als bei in das Aufnahmeloch (14) eingeschraubter Schließ-Schraube (11) der Umfang des geschlossenen Schellenrings (1) ist.

3. Rohrschelle nach Anspruch 1 oder 2, dadurch gekennzeichnet, daß der Steg (3) durch einen von einem Ende des Schellenrings (1) nach außen gebogenen Flansch (4) gebildet ist, der auch das Aufnahmeloch (14) aufweist.

4. Rohrschelle nach einem der Ansprüche 1 bis 3, dadurch gekennzeichnet, daß der Schließbügel (16) an einem von einem Ende des Schellenrings (1) nach außen abgebogenen Flansch (4) angelenkt ist, der auch die Schließ-Schraube (11) trägt.

5. Rohrschelle nach Anspruch 4, dadurch gekennzeichnet, daß ein eine Schwenkachse bildender Quersteg (17) des Schließbügels (16) zwischen dem Schraubenkopf (13) der Schließ-Schraube (11) und dem Schellenring (1) angeordnet ist.

6. Rohrschelle nach Anspruch 5, dadurch gekennzeichnet, daß mindestens einer von zwei sich an den Quersteg (17) anschließenden Schenkeln (18, 19) des Schließbügels (16) auf der dem Steg (3) zugewandten Seite des Flansches (4) und benachbart zu letzterem mit einem dem jeweils anderen Schenkel (19 bzw. 18) zugewandten Vorsprung (Einbuchtung 20) versehen ist, und daß der Abstand der Schenkel (18, 19) in diesem Bereich kleiner ist als die Breite des Flansches (4).

7. Rohrschelle nach einem Ansprüche 1 bis 6, dadurch gekennzeichnet, daß der Schließbügel (16) aus einem eine Schwenkachse bildenden Quersteg (17), einem den Steg (3) umgreifenden Quersteg (21) und zwei die Querstege (17, 21) verbindenden Schenkeln (18, 19) gebildet ist und daß einer der Querstege (21) geteilt ausgebildet ist.

8. Rohrschelle nach Anspruch 7, dadurch gekennzeichnet, daß der dem Steg (3) zugeordnete Quersteg (21) geteilt ausgebildet ist.

9. Rohrschelle nach einem der Ansprüche 1 bis 8, dadurch gekennzeichnet, daß der Schellenring (1) mit einer Innen-Manschette (8) aus elastischem Material, vorzugsweise Gummi, versehen ist.

10. Rohrschelle nach einem der Ansprüche 1 bis 9, dadurch gekennzeichnet, daß an der Außenseite des Schellenrings (1) eine Befestigungseinrichtung (7) angebracht ist, deren Winkelabstand von dem Steg (3) deutlich kleiner als 180° ist.

11. Rohrschelle nach einem der Ansprüche 1 bis 10, dadurch gekennzeichnet, daß der Steg (3) auf der der Schließ-Schraube (11) abgewandten Seite mit einem das Aufnahmeloch (14) umgebenden Vorsprung (15) versehen ist, und daß der Quersteg (21) des Schließbügels (16) diesen Vorsprung (15) untergreift.

12. Rohrschelle nach Anspruch 2, dadurch gekennzeichnet, daß bei den Steg (3) umgreifendem Schließbügel (16) der Umfang von Schellenring (1) und Schließbügel (16) etwas kleiner ist, als bei an das Aufnahmeloch (14) angesetzter Schließ-Schraube (11) der Umfang von Schellenring (1) und Schließ-Schraube (11) ist.

13. Rohrschelle nach Anspruch 7, dadurch gekennzeichnet, daß mindestens ein Schenkel (18, 19) benachbart zum Flansch (4) eine zum anderen Schenkel (19, 18) gerichtete Einbuchtung (20) aufweist, und daß der Abstand der beiden Schenkel (18, 19) im Bereich dieser mindestens einen Einbuchtung (20) kleiner ist als die Breite des Flansches (4) und/oder des Steges (3).

**Claims**

1. A pipe clamp with a clamp ring (1) which has two ends facing each other, there being formed on one end a closing screw (11) and on the other end a receiving hole (14) for the closing screw (11), characterized in that on one end a swivellable locking shackle (16) is mounted, whereas, on the other end, there is formed a web (3) which protrudes substantially radially outwardly and can be encompassed by the locking shackle (16).

2. A pipe clamp according to claim 1, characterized in that with the locking shackle (16) encompassing the web, (3) the periphery of clamp ring (1) and locking shackle (16) is greater than the periphery of the closed clamp ring (1) when the closing screw (11) has been screwed into the receiving hole (14).

3. A pipe clamp according to claim 1 or 2, characterized in that that web (3) is constituted by a flange (4) bent outwards from an end of the clamp ring (1), said flange also having the receiving hole (14).

4. A pipe clamp according to one of claims 1 to 3, characterized in that the locking shackle (16) is hinged on a flange (4) bent outwards from one end of the clamp ring (1) which also supports the closing screw (11).

5. A pipe clamp according to claim 4, characterized in that a cross-web (17) of the locking shackle (16) constituting a swivelling axis is mounted between the head (13) of the closing screw (11) and the clamp ring (1).

6. A pipe clamp according to claim 5, characterized in that at least one of two arms (18, 19) of the locking shackle (16) connected with the cross-web (17) is provided on the side of the flange (4) facing the web (3) and in the vicinity of the latter with a projection (salient area 20) facing the respective other arm (19 or 18), and in that the distance between the arms (18, 19) in this region is smaller than the width of the flange (4).

7. A pipe clamp according to one of claims 1 to 6, characterized in that the locking shackle (16) is constituted by a cross-web (17) forming a swivelling axis, by a cross-web (21) encompassing the web (3) and by two arms (18, 19) connecting the cross-webs (17, 21), and in that one of the cross-webs (21) is designed in divided form.

8. A pipe clamp according to claim 7, characterized in that the cross-web (21) associated with the web (3) is designed in divided form.

9. A pipe clamp according to one of claims 1 to 8, characterized in that the clamp ring (1) is provided with an inner sleeve (8) of elastic material, preferably rubber.

10. A pipe clamp according to one of claims 1 to 9, characterized in that, mounted on the outside of the clamp ring (1) is a securing device (7), the angular distance of which from the web (3) is clearly smaller than 180°.

11. A pipe clamp according to one of claims 1 to 10, characterized in that the web (3) is provided on the side facing away from the closing screw (11) with a projection (15) surrounding the receiving hole (14), and in that the cross-web (21) of the locking shackle (16) encompasses this projection (15) from below.

12. A pipe clamp according to claim 2, characterized in that when the web (3) is encompassed by the locking shackle (16) the outline of the clamp ring (1) and locking shackle (16) is to some extent smaller than the outline of the clamp ring (1) and closing screw (11) when the latter closing screw (11) is placed on the receiving hole (14).

13. A pipe clamp according to claim 7, characterized in that at least one arm (18, 19) has, in the vicinity of the flange (4) a salient area (20) directed towards the other arm (18, 19), and in that the distance between the two arms (18, 19) in the area of tits at least one salient area (20) is smaller than the width of the flange (4) and/or of the web (3).

**Revendications**

1. Collier pour tuyaux comportant une bague (1) de collier ayant deux extrémités qui se font face, l'une des extrémités possédant une vis de fermeture (11) et l'autre un trou (14) pour recevoir la vis de fermeture (11), caractérisé en ce qu'à l'une des extrémités est adjoint un étrier (16) de fermeture pivotant et à l'autre extrémité est façonné un rabat (3) faisant saillie en direction radiale par rapport à l'extérieur de la bague (1) du collier et pouvant être entouré et saisi par l'étrier (16).

2. Collier pour tuyaux selon la revendication 1, caractérisé en ce que la circonférence de la bague (1) et de l'étrier (16) est plus grande quand l'étrier (16) entoure le rabat (3) que la circonférence de la bague (1) fermée, quand la vis (11) de fermeture est vissée dans le trou (14) prévu à cet effet.

3. Collier pour tuyaux selon la revendication 1 ou 2, caractérisé en ce que le rabat (3) est constitué par un collet (4) recourbé vers l'extérieur à l'une des extrémités de la bague (1) du collier comportant également le trou (14).

4. Collier pour tuyaux selon l'une des revendications 1 à 3, caractérisé en ce que l'étrier (16) s'articule autour d'un collet (4), constitué par une extrémité de la bague (1) recourbée vers l'extérieur et qui porte également la vis (11) de fermeture.

5. Collier pour tuyaux selon la revendication 4, caractérisé en ce qu'une tige transversale (17) de l'étrier (16) constituant un pivot est disposée entre la tête de vis (13) de la vis (11) de fermeture et la bague (1) du collier.

6. Collier pour tuyaux selon la revendication 5, caractérisé en ce qu'au moins l'une des ailes (18, 19) s'ajoutant à la tige transversale (17) de l'étrier (16) comporte une saillie (enfoncement 20) sur le côté du collet (4) tourné vers le rabat (3) et à proximité du collet (4), en face de l'autre aile (19 respectivement 18) et en ce que l'écart entre les ailes (18, 19) est plus petit dans cette zone que la largeur du collet (4).

7. Collier selon l'une des revendications 1 à 6, caractérisé en ce que l'étrier (16) est composé d'une tige transversale (17) constituant un pivot, d'une tige transversale (21) entourant le rabat (3) et de deux ailes (18, 19) reliant les tiges transversales (17, 21) et qu'en ce que la tige transversale (21) est coupée en deux.

8. Collier pour tuyaux selon la revendication 7, caractérisé en ce que la tige transversale (21) adjacente au rabat (3) est divisée en deux.

9. Collier pour tuyaux selon l'une des revendications 1 à 8, caractérisé en ce que la bague (1) est revêtue d'une garniture intérieure (8) en matière élastique, de préférence en caoutchouc.

10. Collier pour tuyaux selon une des revendications 1 à 9, caractérisé en ce qu'un dispositif de fixation (7) est prévu sur le côté extérieur de la bague (1) dont l'angle qui le sépare du rabat (3) est nettement inférieur à 180°.

11. Collier pour tuyaux selon une des revendications 1 à 10, caractérisé en ce que le rabat (3) comporte une saillie (15) entourant le trou (14), sur le côté opposé à la vis de fermeture (11) et en ce que la tige transversale (21) de l'étrier (16) peut se placer sous cette saillie (15).

12. Collier pour tuyaux selon la revendication 2, caractérisé en ce que la circonférence de la bague (1) et de l'étrier (16), quand l'étrier (16) entoure le rabat (3) est légèrement plus petite que la circonférence de la bague (1) et de la vis de fermeture (11), quand la pointe de la vis (11) est placée dans le trou (14).

13. Collier pour tuyaux selon la revendication 7, caractérisé en ce qu'au moins une aile (19, 18), près du collet (4) comporte un enfoncement (20) en direction de l'autre aile (19, 18) et en ce que l'écart entre les deux ailes (18, 19) dans la zone de ces enfoncements (20) est inférieur la largeur du collet (4) et/ou du rabat (3).

FIG.1

FIG.2